# FASCICULE DE BREVET EUROPEEN

(11) **EP 1 019 329 B1**
(45) Date de publication et mention de la délivrance du brevet: **26.03.2003**
(21) Numéro de dépôt: 98946506.7
(22) Date de dépôt: 23.09.1998
(51) Int. Cl.: C02F 3/00, C02F 3/12

(54) **PROCEDE D'EVALUATION ET DE CONTROLE DE LA BIOMASSE CONTENUE DANS LES BASSINS BIOLOGIQUES DE TRAITEMENT D'EAUX USEES**
VERFAHREN ZUR BESTIMMUNG UND KONTROLLE VON BIOMASSE IN EINER BIOLOGISCHEN ABWASSERBEHANDLUNGSANLAGE
METHOD FOR EVALUATING AND CONTROLLING THE BIOMASS CONTAINED IN WASTE WATER TREATMENT BIOLOGICAL TANKS

(30) Priorité: 02.10.1997 FR 9712282
(43) Date de publication de la demande: 19.07.2000
(73) Titulaire: Suez Lyonnaise des Eaux, 92753 Nanterre Cedex (FR)
(72) Inventeur: CAULET, Philippe, F-78870 Bailly (FR); CHATELLIER, Patrice, F-75018 Paris (FR)
(74) Mandataire: Armengaud Ainé, Alain
(86) Numéro de dépôt international: FR9802048
(87) Numéro de publication internationale: WO99018035

(56) Documents cités:
- WO-A-97/00832
- DE-A- 3 543 408
- GB-A- 2 184 110

## Description

La présente invention concerne un procédé d'évaluation de la biomasse contenue dans des bassins d'installations de traitement biologique d'eaux usées. notamment en vue de contrôler l'efficacité du système d'aération de tels bassins.

Le procédé selon l'invention est basé sur la mesure de l'activité respiratoire de la biomasse épurante et il s'applique au cas où l'aération du bassin s'opère par des séquences de marchelarrêt du système d'aération. autorisant ainsi une régulation des systèmes biologiques, aérobies, qui est fondée sur différentes mesures physiques présentant l'avantage d'être rapidement accessibles et donc de se prêter à une régulation en ligne. Ces mesures physiques portent selon l'invention sur :
- la concentration en oxygène dissous dans le bassin d'aération ;
- la concentration en boues activées de la liqueur mixte contenue dans ce bassin d'aération et,
- le débit de l'effluent traversant le bassin d'aération, (Qt + Qr)

A partir de ces données, l'invention permet d'accéder à toute une série d'informations fondamentales sur l'état de la station d'épuration qui dérivent en fait de la caractéristique « consommation d'oxygène par kilo de matières en suspension (boues) et par heure » qui constitue une valeur représentative d'une activité respiratoire de la biomasse, le rapport MV (matières volatiles) MeS (matières en suspension) étant sensiblement constant.

Ces informations sur le fonctionnement de la station de traitement peuvent être par exemple :
- la demande en oxygène des boues, qui permettra de fournir l'aération adéquate à la station d'épuration ;
- la détection de surcharges de pollution par rapport à la capacité biologique épuratoire présente dans le bassin et donc les risques de fonctionnement dégradé de la station,
- les ajustements du débit d'extraction des boues, en fonction de cette caractéristique fondamentale qui est « l'âge des boues » et des valeurs qu'elle doit prendre selon que l'exploitant souhaite ou non favoriser l'élimination de la pollution azotée en conjonction avec la pollution carbonée.

Conséquence des directives européennes, les techniques actuellement mises en oeuvre dans les stations d'épuration d'eaux usées. visent à limiter les rejets dans le milieu naturel d'eaux usées non traitées, ces stations devant assurer le traitement de toutes les eaux collectées. à l'exception de celles résultant des événements pluvieux exceptionnels.

De telles stations de traitement ont pour caractéristique commune de mettre en oeuvre une installation d'épuration par boues activées comportant un bassin d'aération dans lequel s'opère un transfert d'oxygène vers le mélange eau + biomasse, ce transfert étant nécessaire au développement de la biomasse épurante.

En outre, les directives européennes mentionnées ci-dessus exigent une fiabilité accrue des stations d'épuration et elles imposent donc un suivi rigoureux du fonctionnement de celles-ci et leur maintien dans le meilleur état de fonctionnement possible, avec un maximum de capacité épuratoire disponible.

Le rejet dans le milieu naturel d'un. effluent de qualité constante est à respecter dans un contexte où la composition des eaux usées à traiter varie de manière très importante, tant en ce qui concerne la charge polluante que le débit. Il est donc nécessaire, pour maintenir la station d'épuration dans le meilleur état de fonctionnement possible, d'adapter en permanence les critères d'exploitation pour répondre aux modifications des contraintes d'exploitation du traitement biologique. Les nouveaux critères d'exploitation, choisis à la suite de ces adaptations, ne doivent pas détériorer la qualité de la biomasse. En effet, le maintien d'une biomasse de bonne qualité dans le traitement biologique est. essentiel afin d'assurer l'avenir du bon fonctionnement de l'unité de traitement. Un contrôle fréquent de la qualité de la biomasse fournit donc une information importante pour la conduite du procédé. Cette qualité est essentiellement reflétée par l'activité respiratoire de la biomasse.

A ce jour, la conduite des installations ne prend que rarement en compte, l'activité respiratoire de la biomasse, au moins sur la base d'un contrôle continu de ladite activité respiratoire et de son exploitation aux fins d'ajustement du fonctionnement des stations . On se contente souvent de réaliser des extractions cycliques temporisées des boues, afin de maintenir un âge de boues « calculé » compatible avec les traitements requis . On utilise également des automates de régulation utilisant les informations d'une sonde ou d'un respiromètre, mais, dans tous les cas, les mesures sont effectuées sur des échantillons prélevés sur la station et analysés en milieu confiné extérieur, l'exemple le plus classique étant la mesure de respirométrie type Warburg.

De tels systèmes peuvent , de par leur logique, engendrer une sous- oxygénation chronique de la biomasse . En effet les automates réalisent une régulation ou un asservissement à partir de mesures effectuées dans un milieu favorable au développement des échantillons de biomasse et ne prenant donc pas en compte les conditions réelles de fonctionnement des bassins d'épuration : ceci peut conduire à des évaluations « optimistes » de la qualité de la biomasse et, par conséquent, perturber la réponse de l'automate . Un autre cas de sous oxygénation chronique peut survenir par exemple, pour les systèmes de régulation de l'aération reposant sur une mesure de potentiel d'oxydoréduction et installés sur les stations comportant une déphosphatation physico-chimique des effluents

WO 97-00832 concerne le procédé dénommé SBR (Sequencing Batch Reactors) fonctionnant en mode discontinu et ne permettant que d'assurer la gestion de l'oxygène apporté à l'installation. Ce procédé antérieur ne permet pas de résoudre le problème technique résolu par la présente invention, notamment en ce qui concerne le contrôle de l'efficacité du système d'aération, les entrées de flux polluants et les purges de boue de l'installation.

GB-A-2 184 110 concerne un système permettant de suivre la concentration en oxygène dissous dans un réacteur biologique, avec un suivi de la cinétique de décroissement de l'oxygène en l'absence d'aération ; une alarme étant déclenchée lorsque cette décroissance ne correspond pas à une consigné prédéterminée. Cette publication antérieure ne vise pas la gestion de l'aération ni celle des purges des boues.

DE-A-35 43 408 décrit un procédé d'épuration des eaux résiduaires au moyen de boues activées selon lequel, pendant la phase d'aération, on mesure la concentration en oxygène dans le bassin de boues activées et on commande le nombre de dispositifs d'apport d'oxygène en fonction des valeurs mesurées. Cette publication antérieure concerne uniquement la gestion du séquençage de l'aération d'un bassin de boues activées sans qu'il soit question d'assurer une gestion des purges des boues.

L'invention se propose d'apporter un procédé d'évaluation de l'activité respiratoire de la biomasse, qui n'est envisagée dans aucune des publications analysées ci-dessus, ce procédé, ne présentant pas en outre les inconvénients des solutions de l'art antérieur, en effectuant cette évaluation in situ et in vivo de manière à être parfaitement représentative des conditions de vie dans les bassins d'épuration.

Le procédé d'évaluation et de contrôle de la biomasse contenue dans le bassin biologique de traitement d'eaux usées selon l'invention est caractérisé en ce qu'il utilise les séquences de marche/arrêt du système d'aération des bassins de traitement, imposées par la conduite de procédé pour estimer la respiration de la biomasse, celle-ci étant mesurée au cours des phases de non aération selon les étapes suivantes :
a) détermination lors des phases de non-aération, avec une sonde de mesure de la concentration en oxygène dissous, de l'évolution de la quantité d'oxygène contenue dans le bassin d'aération c'est-à-dire sa diminution en fonction de l'activité respiratoire de la boue biologique ou biomasse épurante du bassin ;
b) détermination de la quantité d'oxygène sortant du bassin, d'aération, la quantité d'oxygène entrant dans le bassin au cours de la phase de non-aération, étant considérée comme nulle ;
c) détermination, à partir des informations recueillies lors des étapes a) et b) de la capacité respiratoire de la biomasse épurante ;
d) détermination de la masse de matières en suspension dans les boues à l'aide d'un capteur de concentration en boues ;
e) calcul à partir de la capacité respiratoire de la biomasse et de la concentration en boues, de la quantité d'oxygène consommée par kilogramme de matières en suspension et par unité de temps, c'est-à-dire de l'activité respiratoire spécifique de la biomasse épurante, et
f) utilisation du calcul de l'activité respiratoire spécifique de la biomasse épurante pour réajuster les paramètres de fonctionnement de la station d'épuration, notamment contrôler le rythme d'extraction de la biomasse

Selon l'invention, l'activité respiratoire spécifique de la biomasse ainsi calculée est utilisée pour réajuster les paramètres de fonctionnement de la station d'épuration.

La figure unique du dessin annexé est une représentation schématique d'une installation d'épuration mettant en oeuvre le procédé de l'invention .et montrant la localisation des sondes de mesure de l'oxygène et des matières en suspension.

La sonde utilisée pour la mesure de l'oxygène peut être, par exemple, une sonde polarographique mesurant la concentration en oxygène dissous à l'aide d'un couple de métaux nobles plongé dans un électrolyte qui produit un courant électrique dont l'intensité dépend de la concentration en oxygène dissous.

La masse de matières en suspension dans les boues activées est mesurée par une sonde MeS par exemple du type mettant en oeuvre une mesure d'absorption infrarouge qui est corrélée à la concentration de matières en suspension.

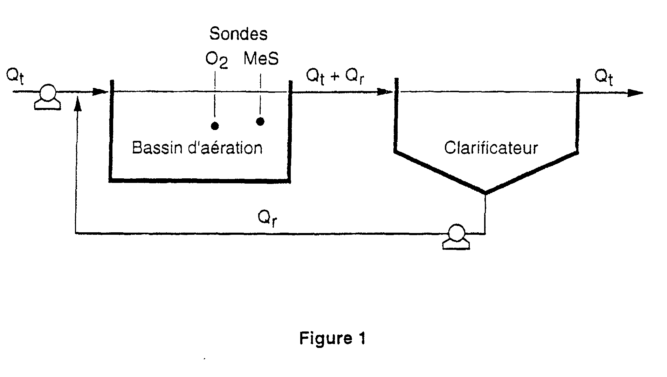

Par ailleurs, la technique de contrôle utilisée dans l'invention, ne nécessite qu'un seul débitmètre pour mesurer le débit Qt + Or traversant le bassin d'aération, une sonde à oxygène dissous et une sonde de mesure de la concentration en matières en suspension pour déterminer l'activité respiratoire spécifique de la biomasse épurante (Figure 1) . Ladite invention repose sur l'analyse du fonctionnement normal de l'installation , en l'absence de toute modification des conditions opératoires, toutes les mesures étant effectuées *in situ* et *in vivo .*

Cette caractéristique distingue l'invention de nombreux autres dispositifs déjà développés [« Evaluation of activated sludge oxygen uptake rate test procedures »; Chiesa S.C., Rieth M.G., Ching T.E.K.L; Journal of Environnmental Engineering, 116, N° 3. 472-486; 1990]. En effet, ces matériels requièrent en général l'utilisation de cellules de mesure particulières (respiromètres) ou de techniques difficiles à mettre en place et nécessitant l'intervention permanente de techniciens analystes spécialisés, telle la méthode du bilan-gaz.

Une autre caractéristique avantageuse de la présente invention est de réaliser la mesure *in-situ* ce qui permet de prendre en compte l'influence de la biomasse sur la quantité d'oxygène transférée.

En ce qui concerne les domaines d'application de la présente invention. on peut citer, sans que cette liste soit limitative. les applications suivantes :
- la connaissance de la respiration permet de modifier le paramétrage du système de régulation de l'aération. Une mesure de la respiration de la biomasse permet alors de détecter la dérive éventuelle du système d'épuration et de réajuster les paramètres du dispositif de régulation
- la connaissance de la respiration de la biomasse peut permettre de contrôler le rythme d'extraction de ladite biomasse. En effet, le taux d'extraction conditionne l'âge de la biomasse et par suite la respiration. Un taux d'extraction anormalement élevé ou une augmentation trop rapide de ce taux impliquerait des âges de boues trop faibles et donc des valeurs anormalement élevées de la respiration.
- la détection de pollutions accidentelles : une augmentation anormale de la respiration de la biomasse peut également être révélatrice de l'arrivée d'une pollution accidentelle. Une telle pollution peut, si elle est susceptible de mettre en danger le fonctionnement futur de l'installation, donner lieu à l'arrêt de l'alimentation de la station d'épuration et l'envoi de l'effluent suspect vers une autre destination .

Il demeure bien entendu que la présente invention n'est pas limitée aux exemples de réalisation décrits et/ou représentés ici mais qu'elle en englobe toutes les variantes entrant dans le cadre de l'invention tel que défini par les revendications annexées.

## Revendications

1. Procédé d'évaluation et de contrôle de la biomasse contenue dans les bassins biologiques d'une station de traitement des eaux usées, **caractérisé en ce qu'**il utilise les séquences marche/arrêt du système d'aération des bassins de traitement imposées par la conduite du processus de traitement, pour estimer la respiration de la biomasse, celle-ci étant mesurée au cours des phases de non-aération, selon les étapes suivantes :
a) détermination lors de phases de non-aération à l'aide d'une sonde de mesure de la concentration en oxygène dissous, de l'évolution de la quantité d'oxygène contenue dans le bassin d'aération, c'est-à-dire de sa diminution en fonction de l'activité respiratoire de la boue biologique ou biomasse épurante du bassin.
b) détermination de la quantité d'oxygène sortant du bassin d'aération, la quantité d'oxygène entrant dans le bassin en phase de non-aération étant considérée comme nulle ;
c) détermination, à partir des informations recueillies lors des étapes a) et b) de la capacité respiratoire de la biomasse épurante ;
d) détermination de la masse de matières en suspension dans la biomasse épurante à l'aide d'un capteur de concentration en boues ;
e) calcul, à partir de la capacité respiratoire de la biomasse et de la concentration en boues, de la quantité d'oxygène consommée par kilogramme de matières en suspension et par unité de temps, c'est-à-dire de l'activité respiratoire spécifique de la biomasse épurante.
f) utilisation du calcul de l'activité respiratoire spécifique de la biomasse épurante pour réajuster les paramètres de fonctionnement de la station d'épuration, notamment contrôler le rythme d'extraction de la biomasse.

2. Procédé selon la revendication 1 **caractérisé en ce que** la sonde de mesure de la concentration en oxygène dissous est une sonde polarographique.

3. Procédé selon la revendication 1, **caractérisé en ce que** la sonde utilisée pour mesurer la concentration en matières en suspension dans la biomasse met en oeuvre une mesure d'absorption infrarouge qui est corrélée à la concentration de matières en suspension.

## Claims

1. Process for the evaluation and control of the biomass contained in the biological tanks of a waste water treatment station, **characterized in that** it uses stop/go sequences of the aeration system of the treatment tanks imposed by the performance of the treatment process in order to estimate the respiration of the biomass, which is measured during non-aeration phases in accordance with the following stages:
a) determination during non-aeration phases using a dissolved oxygen concentration measurement probe the evolution of the oxygen quantity contained in the aeration tank, i.e. its reduction as a function of the respiratory activity of the biological sludge or purifying biomass of the tank,
b) determination of the oxygen quantity leaving the aeration tank, the oxygen quantity entering the tank during the non-aeration phase being considered as zero,
c) determination, on the basis of the information collected during stages a) and b), of the respiratory capacity of the purifying biomass,
d) determination of the suspended matter mass in the purifying biomass with the aid of a sludge concentration sensor,
e) calculation, on the basis of the respiratory capacity of the biomass and the sludge concentration, of the oxygen quantity consumed per kilogram of suspended matter and per unit of time, i.e. the specific respiratory activity of the purifying biomass,
f) use of the calculation of the specific respiratory activity of the purifying biomass for readjusting the operating parameters of the purification station, particularly the control of the biomass extraction rhythm.

2. Process according to claim 1, **characterized in that** the dissolved oxygen concentration measuring probe is a polarographic probe.

3. Process according to claim 1, **characterized in that** the probe used for measuring the suspended matter concentration in the biomass implements an infrared absorption measurement, which is correlated with the suspended matter concentration.

## Patentansprüche

1. Verfahren zum Bestimmen und Steuern der in den biologischen Behandlungsbecken einer Abwasserbehandlungsanlage enthaltenen Biomasse, **dadurch gekennzeichnet, dass** es die Abfolgen von Betrieb und Aussetzen des Belüftungssystems der Behandlungebecken, welche durch die Führung des Behandlungsprozesses versacht werden, zum Abschätzen der Atmung der Biomasse nutzt, die während der Phasen der Nicht-Belüftung gemäß folgenden Schritten gemessen wird:
a) mithilfe einer Sonde zum Messen der Konzentration des gelösten Sauerstoffs in den Phasen der Nicht-Belüftung Bestimmen der Entwicklung der im Belüftungabecken enthaltenen Sauerstoffmenge, d. h. ihrer Abnahme in Abhängigkeit von der Atmungsaktivität des Belebtschlamms oder der reinigenden Biomasse des Beckens;
b) Bestimmen der das Belüftungsbecken verlassenden Sauerstoffmenge, wobei die Sauerstoffmenge, die in Nicht-Belüftungs-Phasen in das Becken gelangt, als gleich Null betrachtet wird;
c) Bestimmen der Atmungskapazität der reinigenden Biomasse aus den in den Schritten a) und b) erhaltenen Informationen;
d) Bestimmen der Masse der in der reinigenden Biomasse suspendierten Stoffe mithilfe eines Sensors für die Schlamm-Konzentration;
e) Berechnen der Sauerstoffmenge, die pro Kilogramm suspendierter Stoffe und pro Zeiteinheit verbraucht wird, d. h. der spezifischen Atmungsaktivität der reinigenden Biomasse, aus der Atmungskapazität der Biomasse und der Konzentration der Schlämme;
f) Benutzen der Berechnung der spezifischen Atmungsaktivität der reinigenden Biomasse zum Nachstellen der Arbeitaparameter der Kläranlage, insbesondere zum Steuern des Rhythmus des Abziehens der Biomasse.

2. Verfahren nach Anspruch 1, **dadurch gekennzeichnet, dass** die Sonde zum Messen der Konzentration des gelösten Sauerstoffs eine Polarografiesonde ist.

3. Verfahren nach Anspruch 1, **dadurch gekennzeichnet, dass** die zum Messen der Konzentration der in der Biomasse suspendierten Stoffe verwendete Sonde eine Messung der InfrarotAbsorption durchführt, die zu der Konzentration der suspendierten Stoffe in Korrelation steht.
